Europäisches Patentamt

**European Patent Office**

**Office européen des brevets**

(19)

(11) Numéro de publication: **0 082 034**
A1

# (12) DEMANDE DE BREVET EUROPEEN

(21) Numéro de dépôt: 82402099.4

(22) Date de dépôt: 17.11.82

(51) Int. Cl.³: **B 63 B 35/44,** E 04 H 3/08,
E 02 D 29/06

---

(30) Priorité: 08.12.81 FR 8122943

(71) Demandeur: **Dumontier, Roland, 4, Quai du Parc,
F-94100 Saint Maur (FR)**
Demandeur: **CHANTIERS NAVALS DE LA CIOTAT
Société Anonyme dite:, F-13600 La Ciotat (FR)**

(43) Date de publication de la demande: **22.06.83**
**Bulletin 83/25**

(72) Inventeur: **Dumontier, Roland, 4, Quai du Parc,
F-94100 Saint Maur (FR)**

(84) Etats contractants désignés: **BE DE IT NL SE**

(74) Mandataire: **Rodhain, Claude, Cabinet Claude
RODHAIN 30, rue La Boétie, F-75008 Paris (FR)**

---

(54) **Construction transportable par voie maritime ou fluviale.**

(57) L'invention concerne un modèle d'hôpital flottant pouvant être amené par simple remorquage d'une aire de construction à un site d'exploitation.

Le problème technique de l'invention est de réduire sensiblement le coût de réalisation d'hôpitaux sophistiqués dans des régions de faibles économie et technolgie.

Selon l'invention, l'hôpital est d'une structure flottante formée d'une double coque (3,4) et d'un double fond (5,6) formant ensemble une capacité étanche et rigide, cette structure servant de barge lors du remorquage de la construction et de fondation lors de son implantation sur le site d'exploitation, ladite structure porteuse étant formée principalement d'éléments primaires longitudinaux avec des renforts transversaux constituant des mailles, le quadrillage ainsi constitué servant d'appui à des files d'épondilles (17) assurant la reprise verticale des charges, cette structure supportant un pont defranc-bord (13) servant d'assise à une construction d'un ou plusieurs étages équipés des installations et matériels techniques.

ACTORUM AG

Construction transportable par voie maritime ou fluviale

, L'invention concerne une construction transportable par voie maritime ou fluviale, et plus particulièrement un modèle d'hôpital flottant pouvant être amené, par simple remorquage, d'une aire de construction à un lieu d'exploitation, l'hôpital pouvant être fixé à demeure sur le site ou encore acheminé ultérieurement vers d'autres régions privées d'établissements hospitaliers.

La réalisation par voie conventionnelle, sur le site, d'un complexe hospitalier, dans des pays industriellement et économiquement peu développés, c'est-à-dire démunis de ressources technologiques et scientifiques nécessaires à la création d'un établissement aussi sophistiqué qu'un hôpital, n'est envisageable que sous l'unique condition d'acheminer sur place des matériaux utiles à la construction et d'avoir recours à un personnel spécialisé que l'on fera venir de pays industrialisés ou de centres souvent fort éloignés du lieu de l'implantation de l'établissement hospitalier. Ces mutations de matériaux, de matériel et de personnel engendrent évidemment des coûts de construction très élevés, de sorte que le pays (qui est le plus souvent un pays en voie de développement) à qui est proposé ce genre d'établissement se voit taxé d'une plus-value importante qui est en fait le résultat de la faiblesse de ses ressources. C'est donc une formule qui, du point de vue humanitaire, social et économique, n'est pas exploitable, car elle risque d'appauvrir encore un peu plus les pays les plus déshérités.

Pour répondre à ce problème, vu à l'échelon du globe, il a été envisagé d'utiliser la technique connue des "usines flottantes" en

BAD ORIGINAI

adoptant par conséquent le principe de ces constructions remorquables mais en l'adaptant évidemment au cas très particulier des hôpitaux. En effet, depuis 1980, il s'est développé une activité d'usines flottantes puisque 43 réalisations ont été, jusqu'à ce jour, recensées sur 150 projets qui avaient été envisagés à la fin de l'année 1980. On entend par usine flottante toute usine construite sur un navire ou barge (en acier ou en béton) et qui est flottante en quittant son lieu d'assemblage. Ces usines répondent généralement à des besoins technico-économiques qui peuvent être répertoriés en trois catégories :

- impossibilité ou grande difficulté pour construire selon les méthodes conventionnelles, par suite des conditions climatiques ou par manque d'environnement technique (ALASKA, SIBERIE, par exemple),

- valorisation des ressources de l'océan (dégazage du pétrole, offshore, conserveries),

- couverture d'un besoin urgent (énergie, eau, béton) ou de capacités de logement pour la réalisation d'un complexe industriel ou d'un centre urbain, besoin fréquemment retrouvé dans les pays en voie de développement.

C'est donc en partant des deux données (coût élevé des hôpitaux exportés et maîtrise de la technologie des usines flottantes) que la construction d'un établissement hospitalier sur structure flottante fut envisagée.

L'idée de réaliser un hôpital complet fut écartée à priori ; seules les unités techniques (production d'énergie, de calories, de froid) et les services médico-techniques seront incorporés dans la structure flottante, ce qui correspond aux locaux requérant la plus grande quantité de main-d'oeuvre spécialisée et incorporant les matériels et matériaux les plus sophistiqués. A ces services seront adjoints 60 lits d'hébergement qualifiés de lits "chauds" destinés aux hospitalisés ayant besoin des soins les plus importants, c'est-à-dire de soins continus, sinon intensifs. De ce fait, la conception et l'organisation des chambres seront plus dépendantes des impératifs techniques ou médico-techniques que des considérations relevant du mode de vie ou des habitudes. Il en résulte que leur aspect et la nature des équipements seront très proches de ce qui est actuellement réalisé dans les hôpitaux conventionnels de type européen.

Par contre, l'hôpital sur structure flottante sera raccordé lors de son arrivée sur le site à des unités d'hébergement réalisées hors structure flottante et celles-ci pourront avoir une conception technique et une architecture tenant compte des habitudes et des moeurs de la population. De même, cette unité d'hébergement pourra comprendre un complément de lits et certains services généraux communs, cette construction à demeure permettant ainsi aux entreprises autochtones de participer à ces travaux. L'hôpital sur structure flottante peut, à son arrivée sur l'aire d'exploitation, être implanté selon deux processus distincts :

a) Mise de la barge sur pilotis pour éviter qu'elle soit soumise aux mouvements de la houle, cette barge étant raccordée au sol par une passerelle accessible aux véhicules de moyen tonnage ou par une digue-jetée (cette solution permet un déplacement ultérieur de l'unité) ;

b) Création d'une souille ou point de fondation, sur laquelle la barge sera échouée et stabilisée. Dans ce cas, la communication avec la mer ou le fleuve sera alors coupée par un remblaiement partiel sur deux niveaux. Cette installation sera raccordée aux réseaux terrestres (électricité, eau, réseau d'assainissement, gaz, téléphone, etc...) depuis une galerie technique, comme cela sera décrit plus loin.

L'objet essentiel de l'invention réside dans la construction sur site terrestre d'un hôpital ou partie d'hôpital dont la structure présente la caractéristique de permettre la mise à l'eau de cet hôpital et lui assurer des qualités marines aptes à permettre, par voie maritime ou fluviale, son acheminement sur un autre site. Cet hôpital peut être entièrement équipé et aménagé afin de le rendre immédiatement opérationnel et autonome. Toutefois, et comme indiqué précédemment, sa vocation principale est de pouvoir s'insérer dans une structure pré-établie ou pouvant l'être par la suite. Il contient donc, à cet effet, l'essentiel des équipements techniques, y compris les productions d'énergie et de traitement des fluides, ainsi que les services médico-techniques d'un hôpital général.

L'invention concerne donc, de façon plus particulière, une construction transportable par voie maritime et/ou fluviale, telle que établissement hospitalier caractérisée en ce qu'elle est constituée d'une structure porteuse flottante formée d'une double coque et d'un double-fond formant ensemble une capacité étanche et rigide, cette structure servant de barge lors du remorquage de la construction et de fondation lors de son implantation sur le site d'exploitation, ladite structure porteuse étant formée principalement d'éléments primaires longitudinaux avec des renforts transversaux constituant un ensemble de mailles normalisées, le quadrillage ainsi constitué servant d'appui à des files d'épontilles assurant la reprise verticale des charges, cette structure supportant un pont de franc-bord servant d'assise à une construction en acier d'un ou plusieurs étages équipés des installations et matériels techniques propres au fonctionnement immédiat de l'établissement hospitalier.

Suivant un mode de réalisation, la structure porteuse est constituée d'une barge, ayant en section transversale la forme d'un U à double paroi, de manière à définir avec le pont de franc-bord une capacité servant de local technique.

Suivant une autre caractéristique de l'invention, la structure porteuse forme un ensemble monobloc flottant, celle-ci étant constituée extérieurement d'une double paroi composée de tôles soudées bord à bord et renforcées intérieurement par des profilés raidisseurs longitudinaux et transversaux.

De façon avantageuse, le pont de franc-bord supporté par la structure porteuse, de même que les autres ponts superposés, sont formés d'une ossature métallique constituée de barrots transversaux et d'hiloires orthogonales formant un quadrillage supporté par les files

0082034

d'épontilles, cette ossature étant recouverte d'un plancher métallique en tôle supportant lui-même une chape flottante en béton armé permettant la reprise des inégalités dues à la technique de la construction et assurant l'isolation phonique et l'isolation au feu.

D'autres caractéristiques et avantages de l'invention ressortiront de la description ci-après et des dessins annexés qui sont donnés à titre d'exemples non limitatifs, dessins dans lesquels :

- la Fig.1 est une vue en perspective prise dans un plan transversal de la construction selon l'invention,

- la Fig.2 est une vue de dessus d'un des étages de la construction et plus particulièrement celui qui est visible après retrait de la terrasse,

- la Fig.3 est une vue en coupe transversale d'un des piliers d'épontilles montrant le passage et la distribution des gaines techniques,

- la Fig.4 est une vue en coupe verticale de la Fig.3 selon la ligne A-A,

- la Fig.5 est une vue frontale schématique de la construction en position "sur pilotis",

- la Fig.6 est une vue en perspective de la construction sur pilotis en position finale raccordée à des unités fixes,

- la Fig.7 est une vue en perspective de la construction en position échouée, associée à un complexe terrestre.

L'idée essentielle de l'invention réside dans la construction sur un site terrestre d'un hôpital ou partie d'hôpital dont la structure présente la caractéristique de permettre la mise à l'eau de cet hôpital et lui assurer des qualités marines aptes à permettre, par voie maritime ou fluviale, son acheminement sur un autre site. Cet hôpital peut être entièrement équipé et aménagé afin de le rendre immédia-

6.

0082034

tement opérationnel et autonome. Toutefois, sa vocation principale est de pouvoir l'insérer dans une structure pré-établie ou pouvant l'être par la suite. Il contient, à cet effet, l'essentiel des équipements techniques, y compris les productions d'énergie et de traitement des fluides, ainsi que les services médico-techniques d'un hôpital conventionnel.

La conception a été effectuée dans le but d'assurer un haut niveau de sécurité, tant en ce qui concerne la situation de transfert ou remorquage que la situation finale sur le site.

La conception en tant qu'engin flottant répond au règlement d'une Société de Classification telle que le BUREAU VERITAS, tandis que la conception en tant que structure terrestre répond aux normes exigées relatives à la sécurité des constructions des bâtiments recevant du public.

La réalisation d'un établissement hospitalier, en partant d'une structure flottante, comporte deux volets distincts :

- le premier concernant la conception et la construction de la structure flottante en vue de son remorquage,

- la seconde concernant les travaux sur le site qui sont à traiter de manière conventionnelle et qui concernent la surface à aménager pour la réception de la structure flottante (souille ou fondation sur pieux) et les constructions à réaliser sur la terre ferme (complément des unités d'hébergement, services communs, infrastructure technique et routière).

Un tronc commun d'étude s'applique au programme d'établissement, médical et technique, détaillé. Partant de ces programmes, la définition de ce qu'il est nécessaire d'inclure dans la structure flottante est arrêtée. A partir de là, les études suivent deux cheminements parallèles, mais distincts :

BAD ORIGINAL

- préparation du site pour l'accueil de la structure flottante et construction des ouvrages sur la terre ferme faisant appel à un mode opératoire conventionnel,

- réalisation de la structure proprement dite, partition de l'espace, de manière à créer les services prévus au programme (équipement technique, ameublement et mise en place des fournitures de première maintenance, remorquage maritime, éventuellement fluvial) et échouage ou mise sur pilotis, toutes ces opérations sauf la dernière, se déroulant sur le chantier naval.

La troisième phase de travaux intéresse directement le parachèvement de façon à harmoniser l'ensemble, c'est-à-dire à assurer le raccordement de la structure flottante au réseau extérieur et à la voirie, le remblayage éventuel autour de la structure, la protection et la finition.

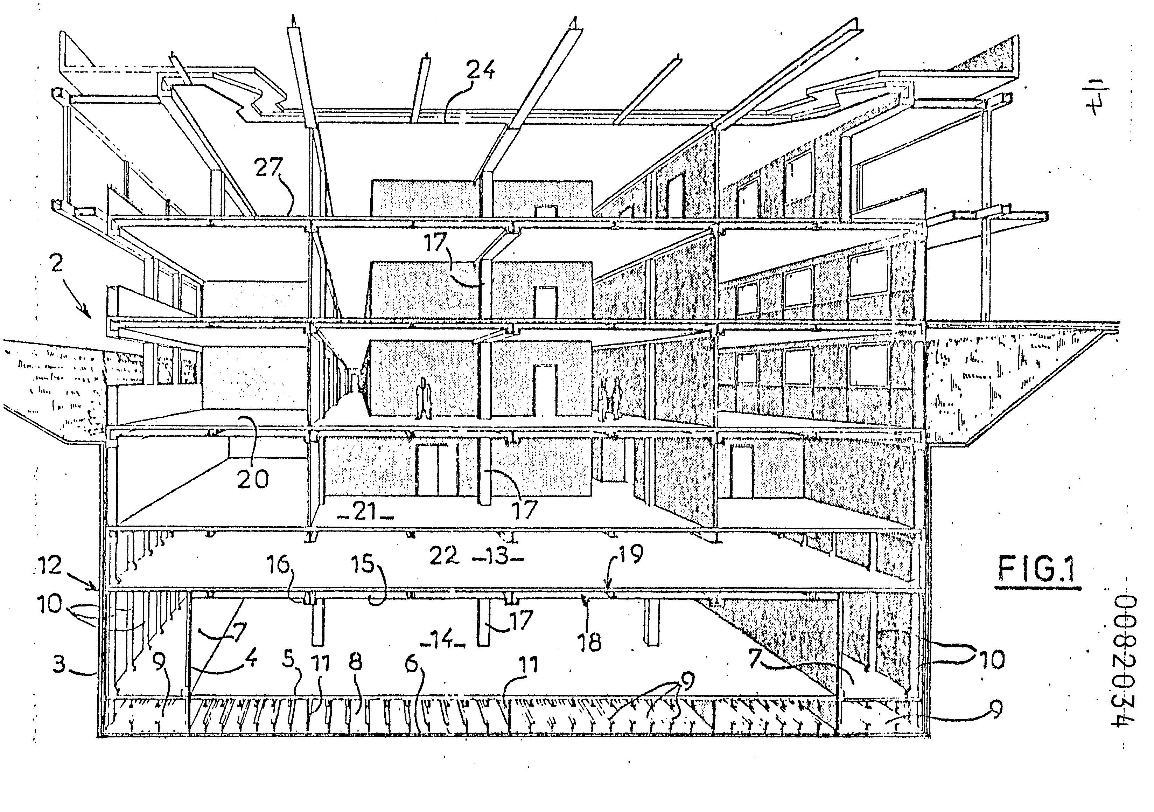

La construction, en l'occurence l'établissement hospitalier, est constituée (Fig.1) de deux parties essentielles, d'une part la structure porteuse flottante ou flotteur 1, d'autre part la partie bâtiment proprement dite 2, supportée par cette structure.

La structure porteuse est constituée essentiellement d'une double coque et d'un double fond formés respectivement de parois métalliques 3 - 4, et 5 - 6, les capacités formées par ces parois étant compartimentées pour former des caissons latéraux 7 et des caissons de fond 8 rigidifiés de l'intérieur par des profilés ou raidisseurs dont certains 9 sont longitudinaux tandis que d'autres 10 sont transversaux. Ces profilés assurent la rigidité de la structure flottante et évitent sa déformation en cours de transfert. Cette résistance est essentielle car il faut en effet que cette structure flottante ait toutes les qualités marines nécessaires pour résister aux efforts variables de la houle.

Par ailleurs, cette structure métallique de haute résistance à la déformation et à la torsion présente l'avantage de résister aux secousses sismiques lors de son implantation terrestre sur le site d'exploitation.

0082034

Cette structure porteuse ou barge est construite principalement dans le système longitudinal et la structure du double fond comporte des carlingues dont une centrale 11 et des varangues espacées en principe tous les cinq couples. Cette structure est construite selon un système de mailles normalisées d'environ 7,20 m de long, chaque élément de tôle formant la coque de la barge étant de type modulaire et étant limité par des files d'épontilles ou des cloisons d'épontillage décrites ultérieurement.

Deux cloisons principales transversales complètent la structure résistante pour former des contreventements vis-à-vis des sollicitations transversales (lors du remorquage et après la phase remorquage car elles assurent le contreventement de la construction après son implantation et sont un élément du compartimentage incendie).

Les caissons 7 et 8 formant les côtés latéraux et le fond de la barge sont étanches pour former des capacités permettant d'assurer le ballastage de la barge en vue du remorquage et la tenue du flotteur en cas d'avarie au bordé ou au fond. Ces mêmes caissons serviront également à ajuster le niveau d'immersion de l'ensemble pour permettre les meilleures capacités de navigabilité du bâtiment ou son délestage pour l'échouage ou la mise sur pilotis. Lorsque l'ensemble est installé sur son site de destination, ces caissons trouvent, par ailleurs, d'autres affectations puisqu'ils peuvent servir de réserves de fuel pour la production d'énergie, de calories ou de frigories, ou encore servir de réservoirs d'eau potable si le réseau de raccordement terrestre présente des risques de non-permanence d'approvisionnement ou servir de réservoirs d'eau pour la lutte contre l'incendie ou de magasins divers.

Cette barge, de construction métallique, est entièrement soudée et est formée de surfaces planes de section transversale rectangulaire, cette barge étant composée d'une partie cylindrique ayant une longueur de 112,8 m ; la largeur de la double coque est de 2,400 m et elle s'étend depuis le double fond jusqu'au niveau 12 du pont de franc-bord.

La barge a, en section transversale, la forme d'un U et sa partie centrale définit, avec le pont de franc-bord 13, un volume utile 14 pour l'implantation des principales servitudes et machineries liées à l'hôpital (chauffage, conditionnement d'air, génération de divers gaz, groupe électrogène de secours, magasins et réserves diverses : fuel, eau).

Le pont de franc-bord 13 est constitué d'un quadrillage métallique 14 formé de barrots 15, orientés dans un sens transversal se raccordant à des hiloires 16, de sens longitudinal, les points d'intersection de ces profilés étant supportés sur des files d'épontilles (poteaux) 17 assurant la reprise verticale des charges. Cette ossature porteuse du pont de franc-bord est recouverte d'un plancher métallique 18, sur lequel peut être mise en place une chape flottante en béton armé 19, celle-ci ayant pour fonction la reprise des inégalités dues à la technique de construction et assurant, par ailleurs, l'isolation phonique et l'isolation au feu du bâtiment. Sous la face inférieure du pont de franc-bord est mis en oeuvre un faux plafond pour l'isolation acoustique et thermique. Les files d'épontilles 17 sont situées aux points d'intersection des mailles de la construction, de manière, comme indiqué précédemment, à assurer la reprise verticale des charges. Entre le pont de franc-bord 13 et le pont supérieur 20 est prévu un pont intermédiaire 21 qui définit, avec le pont de franc-bord 13, un volume technique 22 qui servira au passage des différents circuits de canalisation en vue de leur répartition dans les espaces supérieurs. Ce volume utile sert également à la circulation et aux différentes servitudes lors du remorquage.

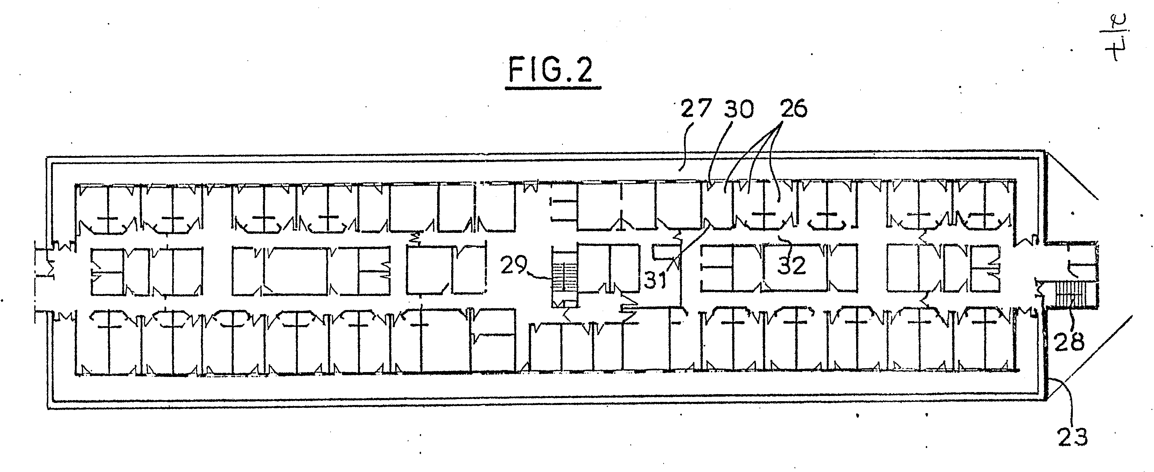

La barge comporte encore, à chacune de ses deux extrémités frontales, des parois d'abordage 23 (Fig.2) pour assurer l'étanchéité et l'indéformabilité de la structure pendant la phase remorquage.

A partir du niveau 2, c'est-à-dire du pont intermédiaire 21, la construction est sensiblement analogue à celle des constructions terrestres classiques. La conception, la distribution, l'aménagement des volumes répondent aux règles de construction des bâtiments terrestres de même catégorie. Ils bénéficient, par contre, de certaines dispositions inhérentes aux constructions navales. Ces constructions répondent aux normes de sécurité, notamment en matière de prévention et de lutte contre l'incendie et aux risques de panique des établissements recevant du public. De par la conception de la structure porteuse apte à encaisser les mouvements de houle, ces constructions répondent, dès l'origine, aux règles de constructions para-sismiques puisque la structure porteuse est construite de façon à être résistante à la déformation d'efforts mobiles répétés.

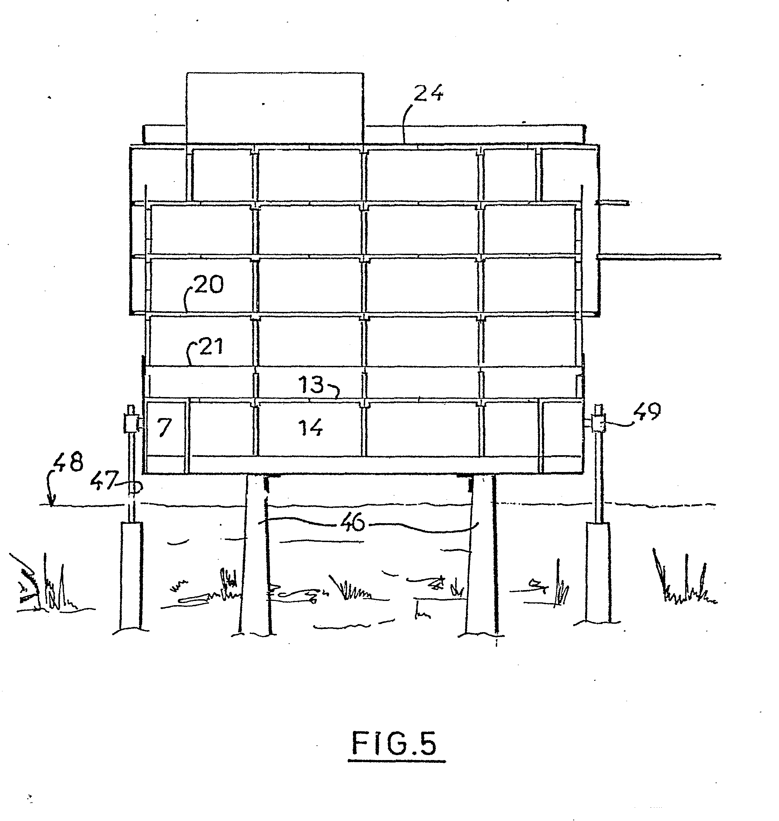

Chaque pont est construit de manière analogue au pont de franc-bord, c'est-à-dire qu'il est formé d'une ossature métallique constituée de barrots et d'hiloires orthogonales recouverts d'un plancher métallique et d'une chappe flottante en béton. Les locaux médico-techniques ainsi que les chambres d'hébergement sont distribués de manière à permettre un meilleur accès par les visiteurs et le personnel soignant, comme cela est notamment visible en Fig.2 où l'on a représenté l'étage d'hébergement situé sous la terrasse 24 (Fig. 1 et 5), celle-ci pouvant être revêtue d'un matériau emmagasinant l'énergie solaire ou de capteurs solaires. L'étage d'hébergement est formé de chambres 26 réparties principalement sur la périphérie de l'édifice selon une disposition en forme de boucle, la partie centrale subsistante étant occupée par les blocs médico-techniques, les salles de soins, les postes de personnel soignant, la lingerie, les bureaux de surveillance, les sanitaires, etc... Les chambres sont ceinturées par un couloir 27 formant une coursive périphérique qui peut être en forme de balcon ou qui, au contraire, peut être fermée lorsque le bâtiment sera implanté dans des régions climatiques à très faible ou forte température. Cette coursive sert de circulation aux visiteurs qui peuvent y accéder par les escaliers latéraux 28 ou centraux 29, les escaliers ou ascenseurs 28 étant situés à l'intérieur de la paroi d'abordage 23.

BAD ORIGINAL

Chaque chambre 26 comporte une porte d'accès 30 pour les visiteurs donnant sur la coursive et une seconde porte opposée 31 débouchant sur le couloir 32 longeant les blocs médico-techniques. Cette disposition permet une bonne organisation du travail et évite que le personnel hospitalier soit gêné ou perturbé dans ses soins par les visiteurs.

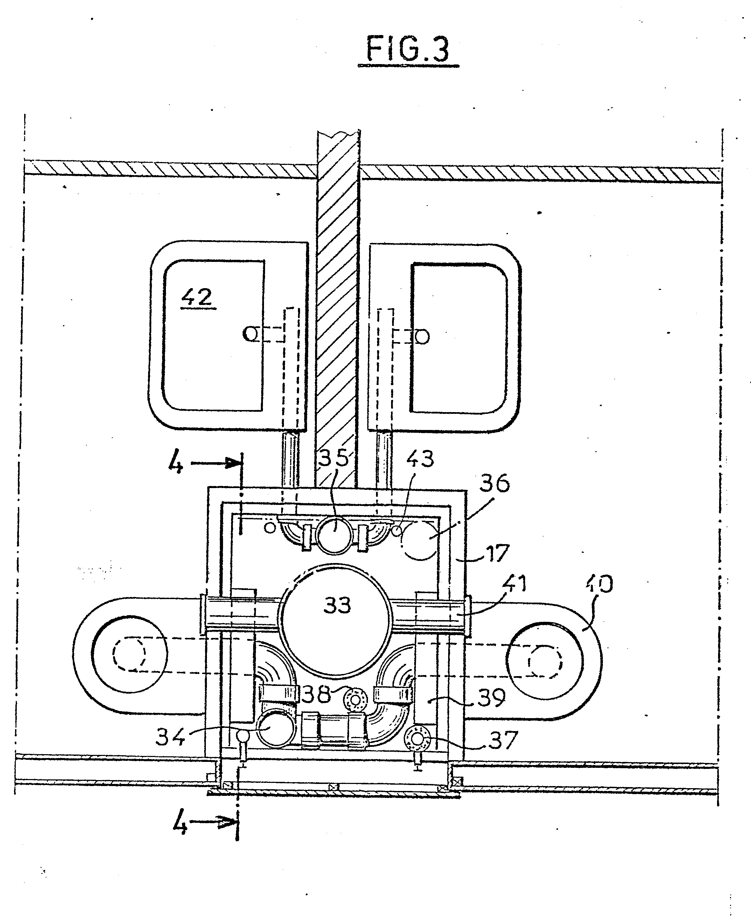

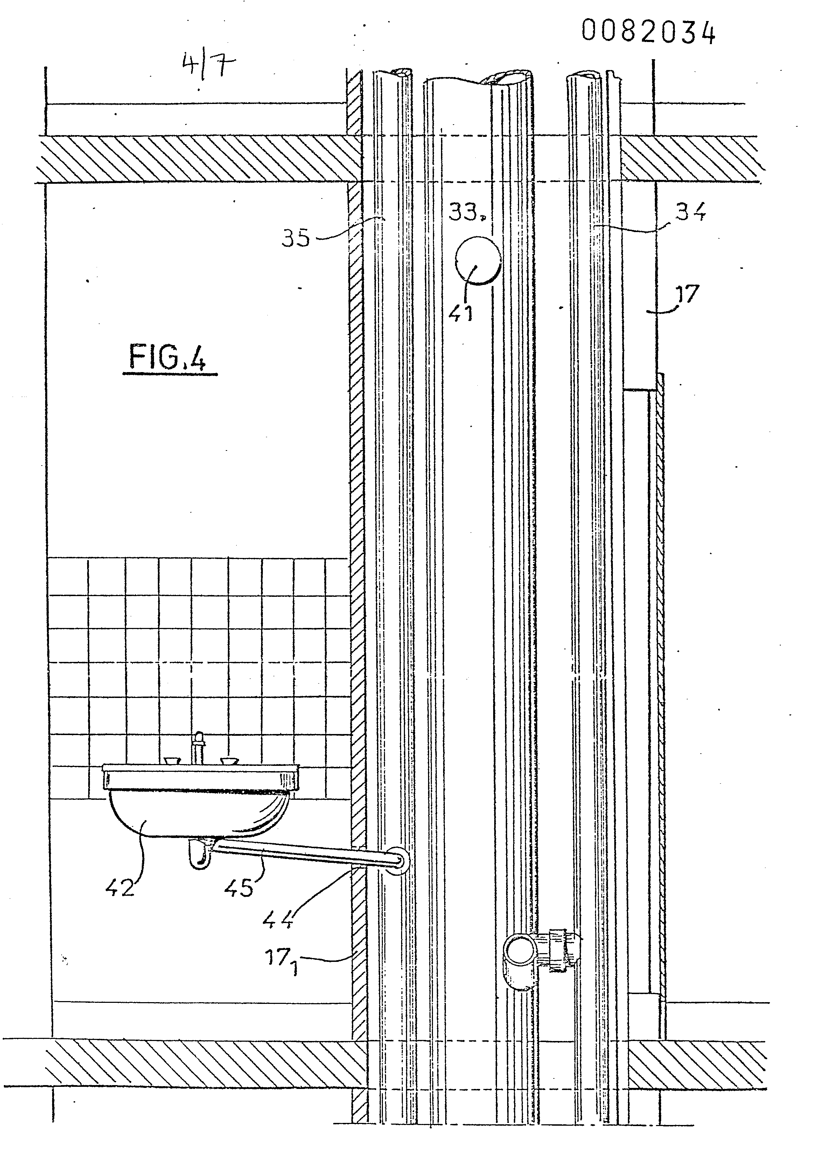

Selon une caractéristique de l'invention telle qu'illustrée en Fig.3 et 4, les files d'épontilles ou piliers sont réalisés sous la forme de poteaux tubulaires pouvant servir non seulement à la reprise verticale des charges, mais également au passage et à la circulation des fluides. C'est ainsi que le pilier 17, représenté en Fig.3 reçoit une gaine 33 d'extraction d'air, une chute 36 des eaux pluviales, une colonne 37 d'eau chaude, un retour 38 d'eau chaude, une colonne d'eau froide non représentée, une chasse d'eau incorporée 39 débouchant sur une cuvette de water-closet 40, une bouche d'extraction 41, un lavabo 42, une canalisation de vide 43 ; les mêmes dispositions peuvent être utilisées pour constituer les gaines électricité, téléphone, etc...

Ces piliers comportent, bien entendu, des ouvertures latérales permettant de desservir chaque étage à partir des gaines techniques qu'ils renferment. Ces ouvertures 44 sont visibles en Fig.4 où l'on voit effectivement que la paroi $17_1$ du pilier est traversée par le conduit 45 allant au lavabo 42. Ce système permet ainsi de masquer et de protéger toutes les gaines techniques et d'assurer leur parfaite distribution.

Lorsque la construction est terminée, elle est remorquée sur le site d'exploitation par voie maritime ou fluviale et elle est alors implantée sous la forme "fixée sur pilotis" ou la forme "échouée" selon que la construction devra rester à demeure ou être de nouveau transplantée en un autre lieu.

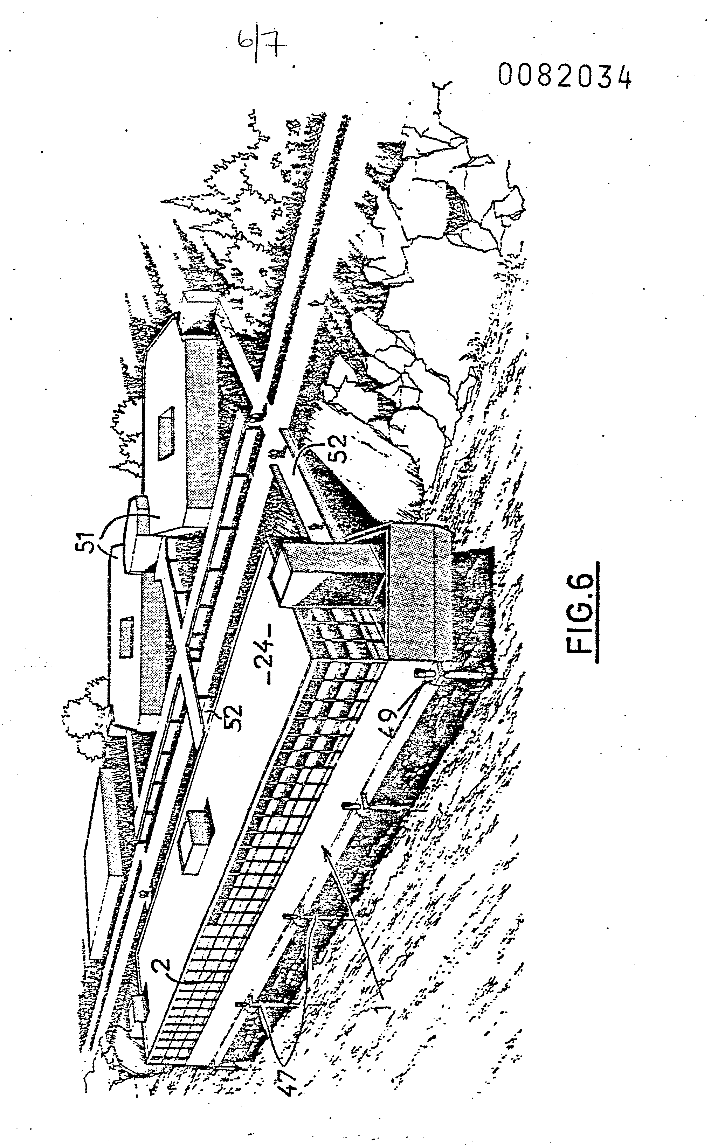

On a écarté d'emblée, bien que cette solution pouvait être adoptée, le simple amarrage consistant à laisser la construction à flot et à la relier au sol par des passerelles dont la conception permettrait de pallier les variations de niveau de l'élément liquide. Les deux solutions les plus adaptées dans le cas d'un hôpital semblent en effet être la position "sur pilotis" et la position "échouée". Dans la position "sur pilotis" (fig.5), des pieux 46 sont forés à partir du fond, après quoi ils sont surmontés de piliers en béton armé comportant des pattes métalliques, soudées sous la coque, ou de piliers métalliques. La construction flottante vient se placer entre ces piliers et, par un système fixe ou mobile de vérins 47 de type mécanique, hydraulique ou pneumatique, se trouve hissée à un niveau supérieur à l'élément liquide 48, de sorte que la construction est désolidarisée de la houle. Cet ensemble de vérins, appelé "jack-up" est réparti (Fig.6) sur la périphérie de la coque, devenue la fondation de la construction et coopère avec des brides 49 soudées sur la façade de la barge. Il est également possible de mettre en place l'hôpital sur les pilotis en utilisant une barge submersible, utilisable pour d'autres opérations du même type. Dans ce mode d'implantation, la construction hors d'eau est raccordée (Fig.6) à l'unité d'hébergement 51, préfabriquée sur le site, par des passerelles 52 accessibles aux véhicules de moyen tonnage ou par une digue-jetée. Cette solution, comme indiqué précédemment, permet un déplacement ultérieur de l'unité par simple démontage des liaisons avec les pilots et immersion partielle de la coque, grâce au ballastage réalisé par le double fond et la double coque de la structure porteuse.

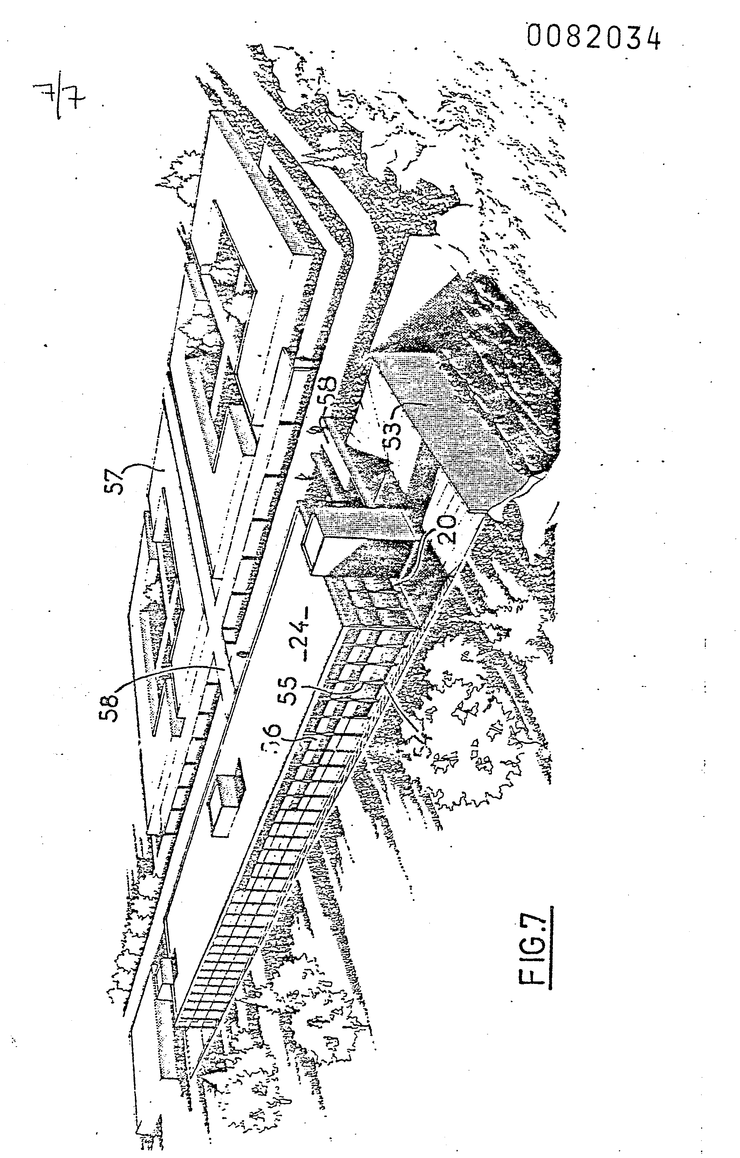

Dans la solution "échouée" (Fig.7) la construction est placée sur des piles 46 ou des plots en attente formant fondations ; cet ensemble est pré-construit dans une souille réalisée en bordure de rivage ; le liaisonnement entre la construction et ses dispositifs de fondation se fait par soudure. La souille est obturée par une digue 53 après que le bâtiment ait été stabilisé. La souille est ensuite asséchée par pompage, puis remblayée. Le niveau de remblaiement est fonction de la topographie générale du projet ; il peut atteindre celui du pont supérieur 20, laissant dans ce cas apparaître au-dessus du sol les 3 niveaux - 54 - 55 - 56.

Là encore, la construction est associée aux bâtiments 57, qui peuvent être des locaux d'hébergement construits avant l'arrivée de l'hôpital ou après, par des passerelles 58. Bien entendu, l'ossature porteuse ou coque comporte des moyens de raccordement pour relier toutes

0082034

les gaines techniques et en particulier les conduits d'évacuation des eaux vannes ou des eaux usées, ainsi que les canalisations d'eau potable ou les conducteurs électriques aux réseaux de viabilisation existants sur le site.

La solution "sur pilotis" est principalement utilisée lorsque la nature du rivage présente de trop grandes difficultés pour l'échouage, par exemple dans le cas de roches compactes, de marées de trop grande amplitude ou de terrain non stabilisé. Par ailleurs, cette solution est également appréciée lorsque le programme prévoit un déplacement ultérieur du bâtiment.

La construction telle que décrite précédemment présente de nombreux avantages et en particulier :

Ces constructions hospitalières sont destinées à l'exportation et plus particulièrement à destination des pays en voie de développement. Notamment, dans des secteurs où les conditions climatiques ou le manque d'environnement technique créent des difficultés, sinon des impossibilités de recourir aux moyens traditionnels.

Par ailleurs, le fait de réaliser avec des moyens industriels la partie la plus sophistiquée d'une centre hospitalier qui partira de son lieu de construction initial entièrement achevé, équipé, meublé et essayé, constitue un avantage très appréciable comparé à la construction par processus traditionnel.

Pour réaliser un équipement identique à celui proposé, 75 % des matériaux et fournitures doivent être importés sur le lieu d'implantation. Le rassemblement des matériaux et fournitures, leur emballage, expédition, transport, déchargement, dédouanement, acheminement et stockage sur le site présentent de nombreux aléas.

Pour la main-d'oeuvre, c'est également prés de 70 % qui seront consommés par du personnel en déplacement avec les frais, les chutes de rendement, les attentes pour rupture d'approvisionnement ou livraisons non conformes que cela suppose.

BAD ORIGINAL

Lors de son arrivée sur le site, la construction contient les éléments et équipements les plus techniques et les plus sophistiqués sous la forme d'un vaste container fonctionnel.

Dans sa formule de base, ces installations peuvent satisfaire au besoin d'un centre hospitalier de 250 à 300 lits. Etant donné que seuls les lits "chauds" sont contenus dans la construction (50 à 60 environ), les entreprises du pays destinataire ont la possibilité de réaliser les services d'hébergement moins spécialisés.

A ces travaux s'ajoutent les magasins, bureaux, infrastructure routière, réseaux, aménagements du site. Ces entreprises ont donc la possibilité de contribuer à la réalisation de leurs équipements et de le faire selon la conception locale. Ce qui, en dehors des questions techniques, est facteur d'un accueil plus favorable.

Enfin, cette construction peut comporter avantageusement sur sa terrasse 24, un revêtement permettant le captage de l'énergie solaire ou encore des capteurs solaires classiques permettant de récupérer l'énergie solaire pour la transformer en énergie thermique ou électrique. Cette solution est particulièrement avantageuse lorsque le centre hospitalier est implanté dans des régions fortement favorisées par l'ensoleillement.

BAD ORIGINAL

15.

0082034

PEVENDICATIONS

1. Construction transportable par voie maritime et/ou fluviale telle qu'établissement hospitalier, caractérisée en ce qu'elle est constituée d'une structure porteuse flottante formée d'une double coque (3, 4) et d'un double fond (5, 6) formant ensemble une capacité étanche et rigide, cette structure servant de barge lors du remorquage de la construction et de fondation lors de son implantation sur le site d'exploitation, ladite structure porteuse étant formée principalement d'éléments primaires longitudinaux avec des renforts transversaux constituant des mailles, le quadrillage ainsi constitué servant d'appui à des files d'épontilles (17) assurant la reprise verticale des charges, cette structure supportant un pont de franc-bord (13) servant d'assise à une construction d'un ou plusieurs étages équipés des installations et matériels techniques propres au fonctionnement immédiat de l'établissement hospitalier.

2. Construction selon la revendication 1, caractérisée en ce que la structure porteuse est constituée d'une barge, ayant en section transversale la forme d'un U à double paroi, de manière à définir avec le pont de franc-bord une capacité (14) servant de local technique.

3. Construction selon l'une quelconque des revendications 1 et 2, caractérisée en ce que la double coque (3, 4) et le double fond (5, 6) sont compartimentés pour former respectivement des caissons latéraux (7) et des caissons de fond (8) servant de ballasts pendant le transport et de réservoirs, notamment de fuel ou d'eau, lorsque le bâtiment est sur le site d'exploitation.

BAD ORIGINAL

4. Construction selon l'une quelconque des revendications 1 à 3, caractérisée en ce que la structure porteuse forme un ensemble monobloc flottant, celle-ci étant constituée extérieurement d'une double paroi composée d'éléments modulaires en tôle, dont les dimensions correspondent à la maille choisie, ces tôles étant soudées bord à bord et renforcées intérieurement par des profilés raidisseurs longitudinaux (9) et transversaux (10), cette double paroi s'étendant au-delà du pont de franc-bord (13).

5. Construction selon la revendication 1, caractérisée en ce que le pont de franc-bord (13) supporté par la structure porteuse (1), de même que les autres ponts superposés sont formés d'une ossature métallique constituée de barrots transversaux (15) et d'hiloires orthogonales (16) formant un quadrillage supporté par les files d'épontilles (17), cette ossature étant recouverte d'un plancher métallique (18) en tôle supportant lui-même une chape flottante (19) en béton armé permettant la reprise des inégalités dues à la technique de la construction et assurant l'isolation phonique et l'isolation feu.

6. Construction selon l'une quelconque des revendications 1 à 5, caractérisée en ce qu'elle comporte, entre le pont de franc-bord (13) et le pont supérieur (20), un pont intermédiaire (21) définissant un volume utile (22) pour le passage de toutes les canalisations techniques.

7. Construction selon l'une quelconque des revendications 1 à 6, caractérisée en ce que les files d'épontilles (17), sont constituées de piliers tubulaires servant au passage et à la distribution des gaines techniques d'électricité, d'eau, d'air, de téléphone, etc..., ces piliers comportant des ouvertures latérales (44) pour la circulation des canalisations à différents niveaux.

BAD ORIGINAL

8. Construction selon l'une quelconque des revendications 1 à 7, caractérisée en ce qu'elle comporte, au-dessus du pont supérieur (20), des étages abrîtant des blocs opératoires et de radiologie, des cellules de consultation et de réanimation, des chambres d'hébergement ; ces niveaux sont recouverts d'une terrasse isothermique (24) pouvant être accessible.

9. Construction selon la revendication 8, caractérisée en ce que l'étage "hébergement" est formé de chambres réparties sur sa périphérie, ces chambres étant bordées par une coursive (27) en forme de boucle, l'espace central défini par les chambres étant occupé par les locaux médico-techniques, chaque chambre comportant une porte (30) donnant accès sur la coursive et une porte opposée (31) débouchant sur les locaux (32) réservés au personnel soignant.

10. Construction selon la revendication 8, caractérisée en ce que la terrasse (24) est recouverte d'un matériau emmagasinant l'énergie solaire ou d'un capteur solaire.

11. Construction selon l'une quelconque des revendications 1 à 10, caractérisée en ce qu'elle est implantée sur le site d'exploitation sous la forme "sur pilotis" ou "échouée".

12. Construction selon la revendication 11, caractérisée en ce que, lorsqu'elle est implantée sous la forme "finale", l'ensemble du bâtiment est désolidarisé des mouvements de la houle par l'emploi de pilotis (47) et de piles en béton (46) coulées dans le fond marin, celles-ci étant échelonnées en fonction de la maille de construction de la barge pour porter dans le plan vertical des files d'épontilles (17) et comportant des pattes métalliques soudées sous la coque.

0082034

13. Construction selon la revendication 11, caractérisée en ce que, lorsqu'elle est implantée sous la forme "échouée", la structure porteuse sert de fondation et vient reposer sur le sol dans une souille préparée à l'avance en bordure de rivage, celle-ci étant ensuite étanchée par une digue (53), puis asséchée et remblayée.

14. Construction selon l'une quelconque des revendications 10 à 13, caractérisée en ce qu'elle est associée à une unité d'hébergement (51-57) en attente sur le site d'exploitation.

0082034

FIG.1

# FIG.2

27 30 26

29 31 32 28 23

0082034

## FIG.3

FIG.4

**FIG.5**

0082034

FIG.6

FIG.7

7/7

0082034

# 0082034

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | DE-A-2 716 481 (S.POLONYI et al.)<br>*Page 6, lignes 16-20; pages 7,8; figures 1-5* | 1 | B 63 B  35/44<br>E 04 H   3/08<br>E 02 D  29/06 |
| | --- | | |
| A | FR-A-2 449 764 (ALSTHOM ATLANTIQUE)<br>*Page 2, lignes 29-39; page 3; figures 1-5* | 1 | |
| | --- | | |
| A | FR-A-2 303 140 (MITSUBISHI JUKOGYO KABUSHIKI KAISHA)<br>*Page 2, lignes 25-40; page 3,4; figures 1-6* | 1,13 | |
| | --- | | |
| A | US-A-3 262 411 (L.V.KALTENECKER)<br>*Colonne 2, lignes 40-51; colonne 3, lignes 18-75; colonne 4, lignes 1-52; colonne 5, lignes 11-23; figures 1-4* | 1,13 | DOMAINES TECHNIQUES RECHERCHES (Int. Cl. 3) |
| | --- | | B 63 B<br>E 02 D<br>E 04 H |
| A | GB-A-1 531 629 (A.A.YEE)<br>*Page 2, lignes 42-130; page 3, lignes 1-3; figures 1-4* | 1,2 | |
| | --- | | |
| A | FR-A-1 593 398 (R.BROCARD et al.)<br>*Page 3, lignes 5-20; figures 1,2* | 9 | |
| | ----- | | |

Le présent rapport de recherche a été établi pour toutes les revendications

| Lieu de la recherche<br>LA HAYE | Date d'achèvement de la recherche<br>17-03-1983 | Examinateur<br>PRUSSEN J.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03.82